# EUROPÄISCHE PATENTSCHRIFT

(11) **EP 2 825 408 B1**
(45) Veröffentlichungstag und Bekanntmachung des Hinweises auf die Patenterteilung: **07.09.2016**
(21) Anmeldenummer: 13706484.6
(22) Anmeldetag: 21.02.2013
(51) Int. Cl.: B60K 7/00, F16D 28/00, F16D 65/18

(54) **BETÄTIGUNGSEINRICHTUNG FÜR EINE DREHMOMENTÜBERTRAGUNGSVORRICHTUNG**
ACTUATOR DEVICE FOR TORQUE TRANSMISSION EQUIPMENT
EQUIPEMENT DE MANIEMENT DESTINÉ À UN DISPOSITIF DE TRANSMISSION DE MOMENT DE ROTATION

(30) Priorität: 12.03.2012 DE 102012203819; 29.11.2012 DE 102012221817
(43) Veröffentlichungstag der Anmeldung: 21.01.2015
(73) Patentinhaber: Schaeffler Technologies AG & Co. KG, 91074 Herzogenaurach (DE)
(72) Erfinder: FRIEDMANN, Oswald, 77839 Lichtenau (DE)
(86) Internationale Anmeldenummer: PCT/EP2013/053430
(87) Internationale Veröffentlichungsnummer: WO 2013/135472

(56) Entgegenhaltungen:
- AT-U1- 8 596
- DE-A1- 10 143 323
- DE-A1-102009 038 928
- DE-B- 1 132 450

## Beschreibung

Die Erfindung betrifft eine Betätigungseinrichtung für eine Drehmomentübertragungsvorrichtung, wie eine Kupplung, z.B. Reibungskupplung oder formschlüssige Kupplung, oder eine Bremse, und bezieht sich insbesondere auf eine elektromechanische Radantriebseinrichtung die als solche in eine Kraftfahrzeug-Radaufhängungseinrichtung eingebunden ist und einen bezüglich seines Stators an einen Radnabenträger angebundenen Elektromotor umfasst.

Eine Betätigungseinrichtung für eine Kupplung ist aus der AT-U-8596 bekannt.

Aus DE 199 54 544 A1 ist ein Kraftfahrzeugantrieb bekannt, der als solcher eine Brennkraftmaschine umfasst die über ein Schaltgetriebe, ein Achsgetriebe sowie Gelenkwellen mit den Antriebsrädern einer Fahrzeugachse gekoppelt ist. In einem Zwischenbereich zwischen den Antriebsrädern und dem Achsgetriebe sind zwei Elektromotoren vorgesehen über welche das jeweilige Antriebsrad auch elektrisch betrieben werden kann. Im Bereich der Antriebsräder sind mechanische Bremsen vorgesehen durch welche auf das jeweilige Antriebsrad ein Bremsmoment aufgebracht werden kann.

Aus DE 10 2009 038 928 A1 ist ein Radnabenmotor bekannt, der einen im Bereich eines Radlagerträgers angeordneten Stator und einen mit einer Radnabe umlaufenden Rotor umfasst. Bei diesem speziellen Radnabenmotor ist die Weite eines sich zwischen dem Stator und dem Rotor erstreckenden Luftspaltes einstellbar veränderbar.

Der Erfindung liegt die Aufgabe zugrunde, eine Betätigungseinrichtung für eine Drehmomentübertragungsvorrichtung und insbesondere eine elektromechanische Radantriebseinrichtung zu schaffen, die sich durch ein vorteilhaftes mechanisches Betriebsverhalten auszeichnet und durch welche insgesamt der Betrieb eines Kraftfahrzeuges vorteilhaft abgestimmt werden kann.

Die vorgenannte Aufgabe wird erfindungsgemäß gelöst durch eine Betätigungseinrichtung für eine Drehmomentübertragungsvorrichtung, wie eine Kupplung, z.B. Reibungskupplung oder formschlüssige Kupplung, oder eine Bremse, mit zumindest zwei Elektromotoren, wobei die Rotoren der Elektromotoren über ein Summiergetriebe miteinander kinematisch gekoppelt sind und das Summiergetriebe eine Abtriebsseite aufweist, welche mit einem Stellglied der Drehmomentübertragungseinrichtung in der Art gekoppelt ist, dass ein Stellzustand des Stellglieds nach Maßgabe einer Relativdrehung zwischen den beiden Rotoren einstellbar ist.

Die Aufgabe wird insbesondere gelöst durch eine elektromechanische Radantriebseinrichtung mit:
- einem Radlagerträger,
- einer relativ zu dem Radlagerträger drehbewegbar gelagerten Radnabe, und
- einer Motoreinrichtung, zur Generierung eines an der Radnabe anliegenden Drehmomentes,
- wobei die Motoreinrichtung einen ersten Stator und einen ersten Rotor, sowie
- einen zweiten Stator und einen zweiten Rotor umfasst, und
- im Bereich der Radnabe ein mit dieser umlaufendes Stellglied vorgesehen ist, und dieses Stellglied mit dem ersten Rotor und dem zweiten Rotor derart kinematisch gekoppelt ist, dass der Stellzustand des Stellglieds nach Maßgabe einer Relativdrehung zwischen den beiden Rotoren einstellbar ist.

Dadurch wird es auf vorteilhafte Weise möglich, das zur Bewerkstelligung des elektrischen Radantriebs erforderliche Drehmoment durch zwei kinematisch parallel geschaltete Motoren zu generieren und durch eine steuerungstechnisch vorteilhaft aktiv einstellbare Drehwinkeldifferenz zwischen den beiden umlaufenden Rotoren eine nabenseitig vorgesehene, und mit dieser mitlaufende Mechanik zu verstellen.

Die Stellkraftgenerierung erfolgt damit elektromotorisch, ohne dass es hierzu einer mechanischen Stellkraftübertragung zwischen den radlagerseitigen, d.h. dem stationären System und dem radnabenseitigen, d.h. dem mitlaufenden System, oder auch einer Schleifringeinrichtung zur elektrischen Kontaktierung der beiden mitlaufenden Systeme bedarf.

Da die durch das jeweilige Stator/Rotor-Paar gebildeten Antriebsmotoren ohnehin große Antriebsdrehmomente generieren, können diese die zur Betätigung der nabenseitigen Mechanik erforderlichen Stellkräfte zuverlässig aufbringen.

Bei der vorliegenden Radantriebseinrichtung verwendet man als Radantrieb vorzugsweise zwei Elektromotoren die jeweils vorzugsweise in etwa jeweils die halbe Antriebsleitung bringen. Deren Moment/Leistung wird vorzugsweise über einen Planetensatz addiert. Mit einem frei einstellbaren Differenzmoment der beiden Motoren wird ein Stellglied, z.B. eine Spindel betätigt, mit der man eine Kupplung und/oder eine Bremse, oder einen anderweitigen radseitig mitlaufenden Mechanismus, z.B. einen Rotorspaltstelltrieb, betätigen kann. Das Parallelschalten von zwei "halben" Motoren bedeutet nur wenig Mehraufwand, da nicht mehr Wicklungsmaterial (z.B. Kupfer), Eisen und anderweitiges Magnetmaterial gebraucht wird, und in der Leistungselektronik die Bauteile ohnehin parallel geschaltet werden.

Mit der vorliegenden Anordnung kann ein Antriebs- oder Bremsmoment in jede Richtung (also Zug/Schub und Rückwärts) abgegeben werden und als Aktor in jeder Situation positives oder negatives Moment abgegeben werden. Um das Differenzmoment zu erzeugen wird jeweils einer der beiden Motoren kurzzeitig überbestromt, oder es wird die Drehfeldfrequenz oder - phase verändert bzw. verschoben.

Der Radantriebsmotor wird in zwei Hälften aufgeteilt, die wie angesprochen vorzugsweise über einen Planetensatz oder eine Hebel- oder Schrägflächenmechanik mit dem Abtrieb (Rad) verbunden sind. Die Drehbewegung der Planeten wird z. B. über eine Spindel in eine Bewegung, die als Aktor genutzt wird, umgesetzt. Die beiden E-Motoren können unabhängig voneinander angesteuert werden. Als Bremse wird vorzugsweise eine Haltebremse oder Notbremse betätigt. Die Kupplung dient vorzugsweise zum Trennen der Gelenkwelle vom Rad um die Schubmomente des Verbrennungsmotorantriebs abzuschalten. Während der Aktorbetätigung wird jeweils einer der beiden E-Motoren kurzzeitig überbestromt um das notwendige Differenzmoment zu erzeugen. Dadurch wird erreicht, dass sich das Radmoment während des Kupplungsvorgangs nicht ändert. Da die E-Motoren im Vergleich zu einem üblichen Aktor eine hohe Leistung haben, ist das prozentuale Übermoment gering.

Anstelle des Planetenrades kann auch ein einfacher Hebel mit begrenztem Hub eingesetzt werden. Die Spindel kann auch durch einen Rampenmechanismus ersetzt werden. Damit die jeweilige Endposition gehalten wird, können Anschläge eingesetzt werden. Damit diese Position gehalten wird, können die Motoren mit einem kleinen Differenzmoment angesteuert werden oder die Endpositionen sind durch einen Schnappmechanismus selbsthaltend. Soll eine Kupplung und eine Bremse betätigt werden, so wird vorzugsweise jede Betätigungsrichtung für ein Element benutzt. Das System kann an der Vorder- oder Hinterachse eingesetzt werden.

Vorliegend wird somit eine Radantriebseinrichtung geschaffen bei welcher die Leistungsaufbringung auf zwei Teilmotoren aufgeteilt wird, wobei deren Antriebsmoment und über einen Planetensatz oder Hebel wieder zusammengeführt wird. Dabei wird das einstellbare Differenzmoment genutzt um eine mit dem Nabensystem umlaufende Kupplung und/oder Bremse zu betätigen.

Gemäß einer besonders bevorzugten Ausführungsform wird die kinematische Koppelung des Stellglieds mit den beiden Rotoren über ein Summiergetriebe bewerkstelligt. Dieses Summiergetriebe ist vorzugsweise als sog. Umlaufrädergetriebe ausgeführt das als solches die beiden Rotoren und das Stellglied kinematisch koppelt. Vorzugsweise ist das Summiergetriebe derart aufgebaut, dass diese ein Planetenrad oder einen Planetenradträger umfasst, und dass das Stellglied über dieses Planetenrad oder den Planetenradträger angetrieben ist. Das Summiergetriebe umfasst weiterhin ein Hohlrad das an den ersten Rotor angebunden ist, sowie ein Sonnenrad an den zweiten Rotor angebunden ist. Durch dieses Getriebekonzept wird es möglich aus einer Differenz der Drehwinkel zwischen dem ersten Rotor und dem zweiten Rotor eine Stellbewegung zu generieren die als solche die Betätigung, insbesondere Stellzustandsänderung einer nabenseitig mitlaufenden Mechanik ermöglicht.

Vorzugsweise ist diese Mechanik so ausgelegt, dass der Stellweg des Stellglieds begrenzt ist und dieses in eine erste Endstellung verlagerbar ist. In dieser Endstellung wird eine weitere Bewegung des Stellglieds blockiert und damit eine weitere Relativdrehung der beiden Rotoren zueinander verhindert. Die beiden Rotoren sind bei Erreichen des Blockierzustandes des Stelltriebs letztlich starr mit dem nabenseitigen System gekoppelt und leiten ihren gesamten Antriebsleistungsbeitrag in das nabenseitige System, d.h. das umlaufende System ein.

Die nabenseitige, durch das Stellglied betätigte Mechanik ist vorzugsweise weiterhin derart gestaltet, dass das Stellglied in eine zweite Endstellung verlagerbar ist in welcher das Summiergetriebe ebenfalls einen Vollkoppelungszustand einnimmt. In diesem Zustand herrscht dann wieder eine direkte, d.h. kinematisch im wesentlichen starre Koppelung der beiden Rotoren mit dem durch diese angetriebene umlaufenden System.

Im Grunde bilden auch die beiden Rotoren Teil des nabenseitigen, d.h. des umlaufenden Systems. Die beiden Rotoren, oder zumindest einer derselben ist jedoch im Rahmen des Stellweges des Stellglieds und der Übersetzung der Zwischenmechanik gegenüber dem nabenseitigen System drehbar.

Gemäß einer besonders bevorzugten Ausführungsform ist im Bereich des nabenseitigen, d.h. des umlaufenden Systems eine Kupplungseinrichtung vorgesehen über welche die Radnabe mit einer Radantriebswelleneinrichtung koppelbar ist, wobei diese Kupplungseinrichtung über das Stellglied betätigbar ist. Diese Kupplungseinrichtung kann insbesondere als Reibungskupplung ausgebildet sein, deren Kupplungszustand durch die seitens des Stellglieds aufgebrachte Stellkraft einstellbar ist. Diese Reibungskupplung kann insbesondere als Lamellenkupplung ausgebildet sein die als solche koaxial zur Radachse angeordnet ist. Über das Stellglied kann dann der Anpressdruck der Lamellen innerhalb der Lamellenkupplung eingestellt und damit die Ankoppelung einer Radantriebswelle an das nabenseitige System eingestellt werden. Die Radantriebswelle kann mit einem Achsdifferential gekoppelt sein und dient in angekuppeltem Zustand der Übertragung eines Drehmomentes zwischen einem Ausgang des Achsdifferentiales und dem nabenseitigen System.

Über das vorliegende Konzept wird es auch möglich, eine Bremseinrichtung zu betätigen die als solche ein zwischen dem Radlagerträger und der Radnabe wirksames Bremsmoment nach Maßgabe einer durch das Stellglied aufgebrachten Stellkraft oder einer durch das Stellglied anderweitig veranlassten Einstellung erzeugt. Diese Bremseinrichtung kann als Reibungsbremse ausgebildet sein und generiert ein Bremsmoment zwischen dem nabenseitigen, d.h. dem umlaufenden System und dem radlagerseitigen, d.h. dem stationären System.

Gemäß einer besonders bevorzugten Ausführungsform ist die Radantriebseinrichtung derart gestaltet, dass das Stellglied mit der Bremseinrichtung und der Kupplungseinrichtung derart gekoppelt ist, dass im Bereich der ersten Endstellung die Kupplungseinrichtung in einen Kupplungszustand gelangt und im Bereich der zweiten Endstellung die Bremseinrichtung in einen Radbremszustand gelangt.

Die Bremseinrichtung kann so gestaltet sein, dass diese durch entsprechende Ansteuerung von wenigstens einem der Rotoren eine dosierte Einstellung eines Bremsmomentes ermöglicht. Ansonsten ist es auch möglich, die Bremseinrichtung so auszulegen, dass diese als Park- oder Feststellbremse fungiert.

Es ist möglich, im Bereich der das Stellglied einschließenden Stellmechanik Hemmmittel vorzusehen, oder den Stelltrieb insgesamt selbsthemmend auszubilden, so dass ein durch die Differenzdrehung herbeigeführter Einstellzustand durch die innerhalb des Mechanismus wirkenden Reaktionskräfte nicht aufgehoben wird.

Weiterhin ist es möglich, im Bereich des nabenseitigen Systems anderweitige Schaltmittel vorzusehen die es ermöglichen die seitens eines oder der beiden Rotoren generierten Antriebsmomente an das nabenseitige System, d.h. das umlaufende System zu übertragen, bevor die Stellmechanik die Kupplung, oder die Bremse in Eingriff bringt. Die beiden Rotoren können dann einen Radantrieb bewirken, ohne dass die Kupplung geschlossen, oder die Bremse betätigt ist.

Das vorliegende Konzept eignet sich sowohl für gelenkte Fahrzeugachsen, insbesondere Fahrzeugvorderachsen, sowie auch für nicht, oder nicht über große Winkel gelenkte Fahrzeugachsen, typischerweise Fahrzeughinterachsen.

Das vorliegende Konzept eignet sich insbesondere zur Motorisierung von Fahrzeugen im mittleren Leistungsbereich, bei welcher beispielsweise jede Radantriebseinrichtung auf eine elektrische Leistung von etwa 12kW ausgelegt ist, die beispielsweise im Verhältnis von 60 zu 40 auf die beiden Elektromotoren aufgeteilt wird, wobei der größere Leistungsbeitrag auf den Motor mit dem größeren Rotordurchmesser entfallen sollte.

Die beiden je Radantriebseinheit vorgesehenen Motorsysteme können im wesentlichen leistungsgleich ausgelegt sein. Vorzugsweise werden diese Motoren jedoch hinsichtlich ihrer Antriebsleistung asymmetrisch ausgelegt. So kann beispielsweise jener Elektromotor dessen Rotor den größeren Durchmesser aufweist auf einen größeren Leistungsbeitrag ausgelegt sein, als jener Elektromotor welcher den Rotor mit kleinerem Durchmesser aufweist.

Der Rotor, welcher den größeren Leistungsbeitrag liefert kann ggf. starr in das nabenseitige System eingebunden sein, wogegen die Betätigung des Stelltriebs dann durch den leistungsschwächeren Rotor erfolgt. Dieses Konzept ermöglicht es, den leistungsstärkeren Elektromotor beliebig mit Leistung zu beaufschlagen, ohne hierdurch den Stelltrieb anzusteuern.

Der Stelltrieb kann weiterhin derart selbsthemmend ausgebildet sein, dass dieser grundsätzlich den leistungsschwächeren Rotor mitschleppt, so dass eine Verstellung des Stelltriebs erst erfolgt, wenn über den leistungsschwächeren Rotor ein hinreichend großes, d.h. das Leerlaufmoment überschreitendes Moment erzeugt wird.

Die Statoren der beiden Elektromotoren werden vorzugsweise über eine elektronische Schaltungseinrichtung angesteuert. Diese Schaltungseinrichtung kann so gestaltet sein, dass diese verschiedene Betriebsmodi vorsieht und zudem auch den Wechsel zwischen diesen Betriebsmodi derart abwickelt, dass das Antriebssystem kein für die Fahrzeuginsassen überraschendes Betriebsverhalten zeigt. Die Schaltungseinrichtung bietet insbesondere einen ersten elektromotorischen Betriebsmodus in welchem ein Antrieb über wenigstens einen der Elektromotoren erfolgt, sowie einen Betriebsmodus in welchem die radseitige Mechanik eingerückt- oder eingekoppelt ist.

Die elektrische Anbindung der Motoren an die Schaltungseinrichtung ist vorzugsweise so ausgelegt, dass während des Betriebs des Fahrzeuges über wenigstens eines der beiden Motorsysteme neben Radantriebsmomenten auch Bremsmomente generiert werden können, d.h. das System einen Rekuperationsmodus einnimmt. In diesem Modus ist vorzugsweise die Radantriebswelle abgekoppelt. Reicht das im Rekuperationsmodus generierte Verzögerungsmoment nicht aus, so kann die vorliegende radseitige Bremseinrichtung aktiviert werden. Insbesondere zur Realisierung dieser Funktion ist es möglich, den Stelltrieb so auszulegen, dass die zur Aktivierung der Reibungsbremse erforderliche Stellkraft relativ groß ist und in etwa dann aufgebracht wird, wenn das maximal generierbare Rekuperationsmoment von den beiden Motoren aufgebracht wird. Die vorliegende Mechanik bietet dann die Funktion einer Sicherheitsbremse.

### Kurzbeschreibung der Figuren

Weitere Einzelheiten und Merkmale der Erfindung ergeben sich aus der nachfolgenden Beschreibung in Verbindung mit der Zeichnung. Es zeigt:
- Figur 1: eine Schemadarstellung zur Erläuterung des Aufbaus einer ersten Ausführungsform einer vorliegenden Radantriebseinrichtung mit einer durch Relativdrehung des Rotorpaars ansteuerbaren Wellenkupplung;
- Figur 2: eine Schemadarstellung zur Erläuterung des Aufbaus einer zweiten Ausführungsform einer vorliegenden Radantriebseinrichtung ebenfalls mit einer durch Relativdrehung des Rotorpaars ansteuerbaren Wellenkupplung, sowie einer durch das Rotorpaar ansteuerbaren Bremseinrichtung.

### Ausführliche Beschreibung der Figuren

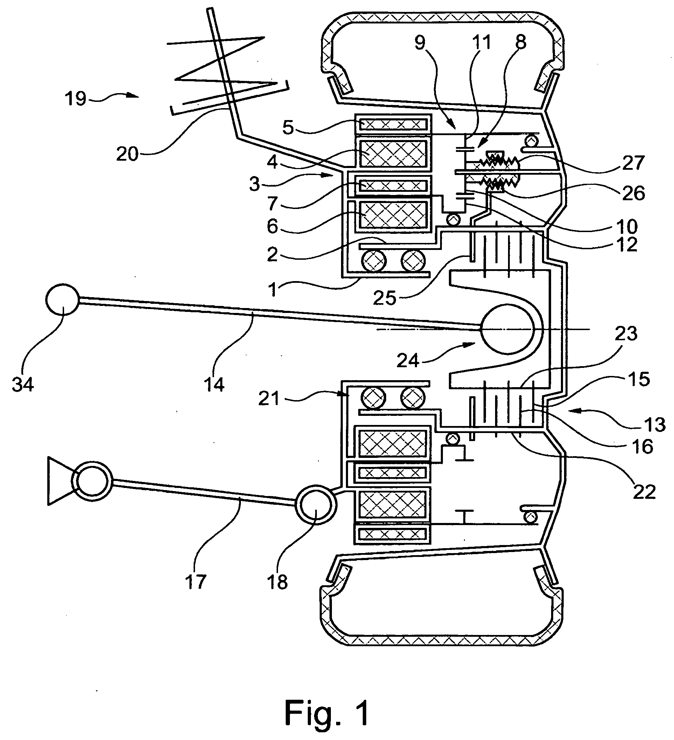

In Figur 1 ist eine Ausführungsform einer elektromechanische Radantriebseinrichtung für ein Kraftfahrzeug gezeigt. Diese umfasst einen Radlagerträger 1, eine auf dem Radlagerträger 1 drehbewegbar gelagerte Radnabe 2, und eine Motoreinrichtung 3, zur Generierung eines an der Radnabe 2 anliegenden Drehmomentes. Die Motoreinrichtung 3 ist derart gestaltet, dass diese einen ersten Stator 4 und einen ersten Rotor 5, sowie einen zweiten Stator 6 und einen zweiten Rotor 7 umfasst.

Im Bereich der Radnabe 2 ist ein mit dieser umlaufendes Stellglied 8 vorgesehen. Dieses Stellglied 8 ist mit dem ersten Rotor 5 und dem zweiten Rotor 7 derart kinematisch gekoppelt dass der Stellzustand des Stellglieds 8 nach Maßgabe einer Relativdrehung zwischen den beiden Rotoren 5, 7 einstellbar ist.

Bei dem hier gezeigten Ausführungsbeispiel wird die kinematische Koppelung des Stellglieds 8 mit den beiden Rotoren 5, 7 über ein Summiergetriebe 9 bewerkstelligt, wobei dieses Summiergetriebe 9 hier ein Planetenrad 10 umfasst durch welches das Stellglied 8 angetrieben wird. Das Summiergetriebe 9 umfasst ein Hohlrad 11 das an den ersten Rotor 5 angebunden ist. Weiterhin umfasst das Summiergetriebe 9 ein Sonnenrad 12 das hier an den zweiten Rotor 7 angebunden ist.

Das Stellglied 8 ist als Spindelelement ausgebildet und in eine erste Endstellung verlagerbar, wobei in dieser Endstellung das Summiergetriebe 9 einen Vollkoppelungszustand einnimmt und das seitens der beiden Rotoren 5, 7 generierte Drehmoment an der Radnabe 2 anliegt. Das Stellglied 8 ist zudem in eine zweite Endstellung verlagerbar in welcher das Summiergetriebe 9 ebenfalls einen Vollkoppelungszustand einnimmt und dabei die beiden Rotoren 5, 7 ebenfalls starr an das nabeseitige System angebunden sind.

Bei dem hier gezeigten Ausführungsbeispiel ist eine Kupplungseinrichtung 13 vorgesehen über welche die Radnabe 2 mit einer Radantriebswelleneinrichtung 14 koppelbar ist. Diese Kupplungseinrichtung 13 ist über das Stellglied 8 betätigbar. Die Kupplungseinrichtung 13 ist hier als Lamellenkupplung ausgebildet. Über das Stellglied 8 ist der Anpressdruck der Lamellen 15, 16 innerhalb der Lamellenkupplung 13 einstellbar.

Die hier gezeigte Radantriebseinrichtung ist in eine Einzelradaufhängungseinrichtung eingebunden. Die Radaufhängungseinrichtung umfasst hier ein unteres Lenkerelement 17 das als Quer- oder insbesondere Dreieckslenker ausgeführt sein kann. Dieses untere Lenkerelement 17 ist über eine äußere, untere Gelenkstelle 18 an den Radlagerträger 1 angebunden. Die Radaufhängungseinrichtung umfasst weiterhin eine Federbeineinrichtung 19 die ebenfalls an den Radlagerträger 1 angebunden ist. Bei dem hier gezeigten Ausführungsbeispiel ist die federnd abgestützte Komponente, hier das untere Federbein 20 starr mit dem Radlagerträger 1 gekoppelt.

Der Radlagerträger 1 selbst trägt ein Radlager 21 das hier als mehrreihiges Wälzlager, beispielsweise als Schrägkugellager ausgeführt ist. Auf dem Radlager sitzt die Radnabe 2 die hier insgesamt eine komplexe Struktur bildet und als Träger für die mitlaufende Mechanik fungiert. Die Radnabe 2 trägt eine durch den Stelltrieb betätigte Mechanik die hier als Kupplungsmechanik 13 ausgeführt ist. Die Radnabe 2 trägt dabei insbesondere eine Kupplungstrommel 22 mit den darin drehfest, jedoch axial verschiebbar aufgenommenen Kupplungslamellen 16. In dieser Kupplungstrommel 22 sitzt eine Kupplungsnabe 23. An dieser Kupplungsnabe 23 sind die Lamellen 15 drehfest jedoch axial verlagerbar geführt. Die Kupplungsnabe 23 ist mit der Gelenkwelle 14 über ein Antriebswellengelenk 24 gekoppelt. Das Antriebswellengelenk 24 sitzt in der Kupplungsnabe 23. Diese Gelenkwelle 14 ist auf ihrer der Kupplungsnabe 23 angewandten Seite über ein Gelenk 34 an ein hier nicht näher gezeigtes Achsgetriebe, insbesondere Achsdifferential angebunden.

Die Betätigung der Kupplungsmechanik 13 erfolgt über eine Druckplatte 25 die wiederum durch den vorliegenden Stelltrieb betätigt wird. Der Stelltrieb ist hier als Spindeltrieb ausgeführt und umfasst eine Stellmutter 26 und eine Stellspindel 27. Die Stellspindel 27 wird über das Planetenrad 10 angetrieben. Das Planetenrad 10 steht wie bereits angesprochen mit dem Hohlrad 11 und dem Sonnenrad 12 in Eingriff.

Das Hohlrad 11 ist mit dem hier als Permanentmagnet-Rotor ausgebildeten ersten Rotor 5 gekoppelt welcher über den ersten Stator 4 mit einem Drehfeld beaufschlagt wird. Das Sonnenrad 12 ist an den hier als Permanentmagnet-Rotor ausgeführten zweiten Rotor 7 angebunden. Dieser wird über den zweiten Stator 6 mit einem Drehfeld beaufschlagt.

Beide Statoren 5, 6 sind an den Radlagerträger 1 starr angebunden und verfügen über mehrpolige Wicklungen die über eine hier nicht näher gezeigte elektrische Schaltungsanordnung mit Spannung beaufschlagt werden, so dass diese ein gefordertes Drehfeld generieren. Die Schaltungsanordnung ist so aufgebaut, dass diese neben einem Antriebsmodus auch einen Rekuperationsbetrieb ermöglicht. Zudem ist die Schaltungsanordnung so aufgebaut, dass diese eine präzise Einstellung der Drehmomente an den beiden Teil-Elektromotoren sowie eine Ermittlung der Rotordrehungen ermöglicht.

Durch entsprechende Ansteuerung der beiden Rotoren 5, 7 können das Hohlrad 11 und das Sonnenrad 12 gegeneinander verdreht werden. Hierbei wird das Planetenrad 10 in Rotation versetzt und damit die Stellspindel 27 betätigt. Je nach Drehrichtung kann hierbei der Anpressdruck zwischen den Lamellen 15, 16 der Kupplung 13 erhöht oder abgesenkt werden.

Das hier gezeigte System ist so ausgelegt, dass dieses in einen Zustand bringbar ist, in welchem die Kupplungslamellen 15, 16 axial komprimiert und damit die Kupplung 13 geschlossen ist. In diesem Zustand ist keine weitere "Vorwärtsdrehung" des Stellglieds 8 möglich und der Stelltrieb blockiert. Die seitens der Rotoren 5, 7 generierten Antriebsmomente wirken nunmehr direkt auf die Radnabe 2. In diesem Zustand kann über die Gelenkwelle 14 ein Antriebsmoment auf die Radnabe 2 übertragen werden. Zudem kann auch über die beiden Elektromotoren Antriebsleistung bereitgestellt werden.

Werden die beiden Rotoren 5, 7 über die ihnen zugeordneten Statoren derart angesteuert, dass das Stellglied 8 "zurückfährt", werden hier die Kupplungslamellen 15, 16 entlastet wird, und der Kupplungszustand der Kupplung 13 wird aufgehoben. Anschließend gelangt der Stelltrieb wieder in eine Endstellung und dass Summengetriebe 9 blockiert. In diesem Zustand kann nun ggf. wieder über wenigstens einen der Rotoren 5, 7 ein Antriebsmoment auf die Radnabe 2 übertragen werden, insbesondere wenn die Spannungsbeaufschlagung der beiden Statoren 4, 6 so abgestimmt wird, dass die Kupplung 13 nicht erneut aktiviert wird.

Bei diesem Ausführungsbeispiel bildet die Radnabe 2, bzw. das mit dieser gekoppelte umlaufende System einen Planetenträger an welchem das zur Betätigung des Stelltriebs vorgesehenen Planetenrad 10 gelagert ist. Das Hohlrad 11, das Planetenrad 10 und das Sonnenrad 12 bilden hier ein Summengetriebe 9 das bei Erreichen von Endstellungen des Stelltriebs blockiert und damit eine Direktübertragung des Drehmomentes wenigstens eines der Rotoren 5, 7 an die Radnabe ermöglicht.

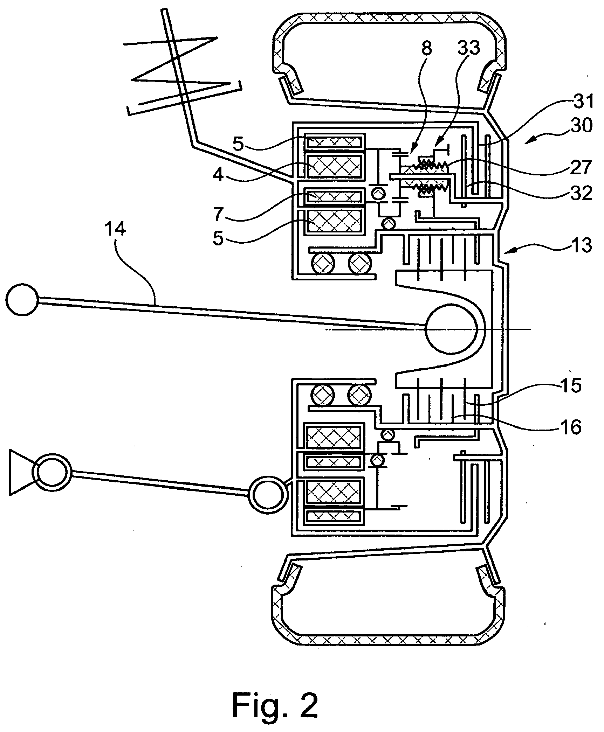

In Figur 2 ist eine zweite Ausführungsform eines elektromechanischen Radantriebs dargestellt. Bei diesem Ausführungsbeispiel ist eine Bremseinrichtung 30 vorgesehen durch welche das radnabenseitige System, d.h. das umlaufende Radsystem mit dem stationären System, d.h. dem Radlagerträger 1 definiert reibschlüssig koppelbar ist. Die Betätigung der Bremseinrichtung 30 erfolgt hier wiederum über den vorliegend über die Radantriebsmotoren betätigten Stelltrieb.

Die hier gezeigte Variante umfasst ähnlich wie bezüglich des Ausführungsbeispieles nach Figur 1 beschrieben, weiterhin eine Kupplungseinrichtung 13 über welche eine Radantriebswelle 14 selektiv an das nabenseitige System angekoppelt werden kann.

Die hier gezeigte Radantriebseinrichtung ist derart aufgebaut, dass die Kupplungseinrichtung 13 bei Erreichen einer ersten Endstellung des Stellglieds 8 eingekuppelt wird. Die Bremseinrichtung 30 wird nach "Zurückfahren" des Stellglieds 8 im Bereich der zweiten bzw. entgegengesetzten Endstellung aktiv. Im Übrigen gelten die Ausführungen zu Figur 1 sinngemäß.

Die nabenseitig mitlaufende, durch die beiden Rotoren 5, 7 betätigte Mechanik ist hier stark vereinfacht dargestellt. Diese Mechanik ist insgesamt so aufgebaut, dass diese insgesamt unwuchtfrei umläuft. Hierzu kann diese Mechanik insbesondere symmetrisch ausgebildet sein. Der zur Betätigung von Bremse 30 und Kupplung 13 vorgesehene Stelltrieb ist hier beispielhaft als Spindeltrieb ausgebildet. Er kann auch einen anderweitigen Aufbau aufweisen.

Die Bremseinrichtung 30 umfasst hier einen stationären, ggf. axial schwimmenden, jedoch drehfest fixierten Druckring 31 und einen axial an diesen verfahrbaren Reibring 32. Der Anpressdruck des Reibringes 32 an den Druckring 31 wird über das Spindelelement 27 eingestellt. Dieses Spindelelement 27 wird durch Abstimmung des an den beiden Rotoren 5, 7 anliegenden Drehmomentes aktiviert.

Bei dem hier gezeigten Ausführungsbeispiel wird die Bremseinrichtung 30 aktiviert, indem der innere Rotor 7 gegenüber dem äußeren Rotor 5 "zurückgefahren" wird. Die Kupplungseinrichtung 13 wird aktiviert, indem der der innere Rotor 7 gegenüber dem äußeren Rotor "vorgeschoben" wird. Durch dieses Konzept wird es möglich, bei maximaler Drehmomentengenerierung an den Rotoren 5 und 7 die Kupplungseinrichtung 13 einzurücken und damit einen Boost-Modus vorzunehmen, bei welchem elektromotorisch und auch über die Gelenkwelle 14 ein Antriebsmoment in die Radnabe 2 eingeleitet werden kann. In diesem Modus werden die Kupplungslamellen 15, 16 nach Maßgabe der Stellkraft an der Stellspindel 27 gegeneinander gedrängt. Zur Herbeiführung eines rein elektromotorischen Betriebs wird die Stellspindel 27 entlastet und die Kupplung 13 geöffnet.

Der insgesamt zur Betätigung der nabenseitig mitlaufenden Komponenten vorgesehene und durch wenigstens einen der Rotoren 5, 7 betätigte Mechanismus kann auch so gestaltet sein, dass dieser weitere Schaltorgane umfasst die es ermöglichen die beiden Rotoren 5, 7 ohne Betätigung der Kupplung 13, oder der Bremse 30 mit der Radnabe 2 so zu koppeln, dass diese Rotoren ein Antriebs- oder Bremsmoment in die Radnabe 2 einkoppeln. Hierzu kann beispielsweise ein elektromechanischer Sperrmechanismus vorgesehen sein, der derart ansteuerbar ist, dass dieser den Stelltrieb 33 selektiv sperrt. Dieser Sperrmechanismus kann durch ein Spannungsereignis gesteuert werden, das induktiv aus dem ersten und oder zweiten Stator 4, 5 abgegriffen wird und hierzu eine Leiterschleife umfasst die sich in dem entsprechenden Rotor 5, 7 erstreckt.

Die Rotoren 5, 7 sind hier als Permanentmagnetrotoren ausgebildet. Es ist auch möglich, diese Rotoren 5, 7 als wicklungsbehaftete Rotoren, ggf. miteinander elektrisch verknüpfte Rotoren, oder insbesondere auch als Kurzschlussläufer auszubilden.

### Bezugszeichenliste

- 1: Radlagerträger
- 2: Radnabe
- 3: Motoreinrichtung
- 4: Stator
- 5: Rotor
- 6: Stator
- 7: Rotor
- 8: Stellglieds
- 9: Summiergetriebe
- 10: Planetenrad
- 11: Hohlrad
- 12: Sonnenrad
- 13: Kupplungseinrichtung
- 14: Radantriebswelleneinrichtung
- 15: Lamellen
- 16: Lamellen
- 17: Lenkerelement
- 18: Gelenkstelle
- 19: Federbeineinrichtung
- 20: unteres Federbein
- 21: Radlager
- 22: Kupplungstrommel
- 23: Kupplungsnabe
- 24: Antriebswellengelenk
- 25: Druckplatte
- 26: Stellmutter
- 27: Stellspindel
- 30: Bremseinrichtung
- 31: Druckring
- 32: Reibring
- 33: Stelltrieb

## Patentansprüche

1. Betätigungseinrichtung für eine Drehmomentübertragungsvorrichtung, wie eine Kupplung, z.B. Reibungskupplung oder formschlüssige Kupplung, oder eine Bremse, mit zumindest zwei Elektromotoren, wobei die Rotoren der Elektromotoren über ein Summiergetriebe miteinander kinematisch gekoppelt sind und das Summiergetriebe eine Abtriebsseite aufweist, welche mit einem Stellglied der Drehmomentübertragungs vorrichtung in der Art gekoppelt ist, dass ein Stellzustand des Stellglieds nach Maßgabe einer Relativdrehung zwischen den beiden Rotoren einstellbar ist.

2. Betätigungseinrichtung für eine Drehmomentübertragungsvorrichtung nach Anspruch 1, wobei das Summiergetriebe als ein Planetengetriebe mit einem Hohlrad, einem Sonnenrad, zumindest einem Planetenrad und einem Planetenradträger ausgebildet ist, wobei der Rotor der ersten E-Maschine das Hohlrad antreibt und der Rotor der zweiten E-Maschine das Sonnenrad antreibt, wobei das zumindest eine Planetenrad einen Gewindebereich aufweist bzw. mit diesem verbunden ist, über den das Planetenrad mit dem Stellglied, z.B. einer Abtriebshülse, in Wirkverbindung ist, und wobei eine Verlagerung des Stellgliedes geeignet ist, die Drehmomentübertragungsvorrichtung zu betätigen bzw. in ihrer Drehmomentübertragungskapazität zu verändern.

3. Betätigungseinrichtung nach Anspruch 2, wobei der Planetenradträger mit der Abtriebsseite der Drehmomentübertragungsvorrichtung verbunden ist, so dass ein durch einen oder beiden der Elektromotoren erzeugtes Drehmoment an die Abtriebsseite vermittelbar ist.

4. Elektromechanische Radantriebseinrichtung mit:
- einem Radlagerträger (1),
- einer auf dem Radlagerträger (1) drehbewegbar gelagerten Radnabe (2), und
- einer Motoreinrichtung (3), zur Generierung eines an der Radnabe (2) anliegenden Drehmomentes, wobei die Motoreinrichtung (3) einen ersten Stator (4) und einen ersten Rotor (5), sowie einen zweiten Stator (6) und einen zweiten Rotor (7) umfasst, und
- im Bereich der Radnabe (2) ein mit dieser umlaufendes Stellglied (8) vorgesehen ist, und
- dieses Stellglied (8) mit dem ersten Rotor (5) und dem zweiten Rotor (7) derart kine-matisch gekoppelt ist, dass der Stellzustand des Stellglieds (8) nach Maßgabe einer Relativdrehung zwischen den beiden Rotoren (5, 7) einstellbar ist.

5. Elektromechanische Radantriebseinrichtung nach Anspruch 4, **dadurch gekennzeichnet, dass** die kinematische Koppelung des Stellglieds (8) mit den beiden Rotoren (5, 7) über ein Summiergetriebe (9) bewerkstelligt wird.

6. Elektromechanische Radantriebseinrichtung nach Anspruch 5, **dadurch gekennzeichnet, dass** dieses Summiergetriebe (9) ein Planetenrad (10) umfasst, und dass das Stellglied (8) über dieses Planetenrad (10) angetrieben ist, und dass das Summiergetriebe (9) ein Hohlrad (11) umfasst und das Hohlrad (11) an den ersten Rotor (5) angebunden ist, und dass das Summiergetriebe (9) ein Sonnenrad (12) umfasst, und dass das Sonnenrad (12) an den zweiten Rotor (7) angebunden ist.

7. Elektromechanische Radantriebseinrichtung nach wenigstens einem der Ansprüche 4 bis 6, **dadurch gekennzeichnet, dass** das Stellglied (8) in eine erste Endstellung verlagerbar ist, und dass in dieser ersten Endstellung das Summiergetriebe (9) einen Vollkoppelungszustand einnimmt und das seitens der beiden Rotoren (5, 7) generierte Drehmoment an der Radnabe (2) anliegt, und dass das Stellglied (8) in eine zweite Endstellung verlagerbar ist in welcher das Summiergetriebe (9) ebenfalls einen Vollkoppelungszustand einnimmt.

8. Elektromechanische Radantriebseinrichtung nach wenigstens einem der Ansprüche 4 bis 7, **dadurch gekennzeichnet, dass** eine Kupplungseinrichtung (13) vorgesehen ist über welche die Radnabe (2) mit einer Radantriebswelleneinrichtung (14)koppelbar ist, und dass diese Kupplungseinrichtung (13) über das Stellglied (8) betätigbar ist.

9. Elektromechanische Radantriebseinrichtung nach wenigstens einem der Ansprüche 4 bis 8, **dadurch gekennzeichnet, dass** die Kupplungseinrichtung (13) als Lamellenkupplung ausgebildet ist und über das Stellglied (8) der Anpressdruck der Lamellen (15, 16) innerhalb der Lamellenkupplung einstellbar ist.

10. Elektromechanische Radantriebseinrichtung nach wenigstens einem der Ansprüche 4 bis 9, **dadurch gekennzeichnet, dass** eine Bremseinrichtung (30) vorgesehen ist die als solche ein zwischen dem Radlagerträger (1) und der Radnabe (2) wirksames Bremsmoment erzeugt, und dass diese Bremseinrichtung (30) über das Stellglied (8) betätigbar ist, wobei das Stellglied (8) mit der Bremseinrichtung (30) und der Kupplungseinrichtung (13) derart gekoppelt ist, dass im Bereich der ersten Endstellung die Kupplungseinrichtung in einen Kupplungszustand gelangt und im Bereich der zweiten Endstellung die Bremseinrichtung (30) in einen Radbremszustand gelangt.

## Claims

1. Actuating device for a torque transmission apparatus, such as a clutch, for example friction clutch or positive clutch, or a brake, having at least two electric motors, the rotors of the electric motors being coupled kinematically to one another via a summing gear mechanism, and the summing gear mechanism having an output side which is coupled to an actuating element of the torque transmission apparatus in such a way that an actuating state of the actuating element can be set in accordance with a relative rotation between the two rotors.

2. Actuating device for a torque transmission apparatus according to Claim 1, the summing gear mechanism being configured as a planetary gear mechanism with an internal gear, a sun gear, at least one planetary gear and a planetary gear carrier, the rotor of the first electric machine driving the internal gear and the rotor of the second electric machine driving the sun gear, the at least one planetary gear having a threaded region or being connected to the said threaded region, via which the planetary gear is operatively connected to the actuating element, for example an output sleeve, and a displacement of the actuating element being suitable for actuating the torque transmission apparatus and/or changing the torque transmission capacity thereof.

3. Actuating device according to Claim 2, the planetary gear carrier being connected to the output side of the torque transmission apparatus, with the result that a torque which is generated by one or both of the electric motors can be imparted to the output side.

4. Electromechanical wheel drive device having:
- a wheel bearing bracket (1),
- a wheel hub (2) which is mounted on the wheel bearing bracket (1) such that it can be moved rotationally, and
- a motor device (3), for generating a torque which prevails at the wheel hub (2), the motor device (3) comprising a first stator (4) and a first rotor (5), and a second stator (6) and a second rotor (7), and,
- in the region of the wheel hub (2), an actuating element (8) which circulates with the former being provided, and
- the said actuating element (8) being coupled kinematically to the first rotor (5) and the second rotor (7) in such a way that the actuating state of the actuating element (8) can be set in accordance with a relative rotation between the two rotors (5, 7).

5. Electromechanical wheel drive device according to Claim 4, **characterized in that** the kinematic coupling of the actuating element (8) to the two rotors (5, 7) is brought about via a summing gear mechanism (9).

6. Electromechanical wheel drive device according to Claim 5, **characterized in that** the said summing gear mechanism (9) comprises a planetary gear (10), and **in that** the actuating element (8) is driven via the said planetary gear (10), and **in that** the summing gear mechanism (9) comprises an internal gear (11) and the internal gear (11) is attached to the first rotor (5), and **in that** the summing gear mechanism (9) comprises a sun gear (12), and **in that** the sun gear (12) is attached to the second rotor (7).

7. Electromechanical wheel drive device according to at least one of Claims 4 to 6, **characterized in that** the actuating element (8) can be displaced into a first end position, and **in that**, in the said first end position, the summing gear mechanism (9) assumes a fully coupled state and the torque which is generated by the two rotors (5, 7) prevails at the wheel hub (2), and **in that** the actuating element (8) can be displaced into a second end position, in which the summing gear mechanism (9) likewise assumes a fully coupled state.

8. Electromechanical wheel drive device according to at least one of Claims 4 to 7, **characterized in that** a clutch device (13) is provided, via which the wheel hub (2) can be coupled to a wheel drive shaft device (14), and **in that** the said clutch device (13) can be actuated via the actuating element (8).

9. Electromechanical wheel drive device according to at least one of Claims 4 to 8, **characterized in that** the clutch device (13) is configured as a multiple disc clutch, and the contact pressure of the discs (15, 16) within the multiple disc clutch can be set via the actuating element (8).

10. Electromechanical wheel drive device according to at least one of Claims 4 to 9, **characterized in that** a brake device (30) is provided which as such generates a braking moment which is active between the wheel bearing bracket (1) and the wheel hub (2), and **in that** the said brake device (30) can be actuated via the actuating element (8), the actuating element (8) being coupled to the brake device (30) and the clutch device (13) in such a way that, in the region of the first end position, the clutch device passes into a coupling state and, in the region of the second end position, the brake device (30) passes into a wheel braking state.

## Revendications

1. Appareil d'actionnement pour un dispositif de transmission de couple, tel qu'un accouplement, par exemple un accouplement à friction ou un accouplement à complémentarité de formes, ou un frein, comprenant au moins deux moteurs électriques, les rotors des moteurs électriques étant accouplés de manière cinématique l'un à l'autre par le biais d'un engrenage cumulateur et l'engrenage cumulateur possédant un côté de sortie qui est accouplé avec un actionneur dú dispositif de transmission de couple de telle sorte qu'un état de commande de l'actionneur est réglable d'après l'indication d'une rotation relative entre les deux rotors.

2. Appareil d'actionnement pour un dispositif de transmission de couple selon la revendication 1, avec lequel l'engrenage cumulateur est réalisé sous la forme d'un engrenage planétaire avec une roue à denture intérieure, une roue solaire, au moins une roue planétaire et un porte-satellites, le rotor de la première machine électrique entraînant la roue à denture intérieure et le rotor de la deuxième machine électrique entraînant la roue solaire, l'au moins une roue planétaire possédant ou étant reliée à une zone filetée par le biais de laquelle la roue planétaire est en liaison active avec l'actionneur, par exemple un manchon de sortie, et un déplacement de l'actionneur étant adapté pour actionner dû dispositif de transmission de couple ou pour modifier sa capacité de transmission de couple.

3. Appareil d'actionnement selon la revendication 2, avec lequel le porte-satellites est relié au côté sortie du dispositif de transmission de couple de sorte qu'un couple généré par un ou les deux moteurs électriques peut être transmis au côté sortie.

4. Appareil d'entraînement de roue électromécanique, comprenant :
- un porte-palier de roue (1),
- un moyeu de roue (2) monté rotatif sur le porte-palier de roue (1), et
- un appareil à moteur (3) destiné à générer un couple appliqué au moyeu de roue (2), l'appareil à moteur (3) comprenant un premier stator (4) et un premier rotor (5) ainsi qu'un deuxième stator (6) et un deuxième rotor (7), et
- un actionneur (8) qui exécute un mouvement circulaire avec le moyeu de roue (2) se trouve dans la zone de celui-ci, et
- cet actionneur (8) est accouplé de manière cinématique au premier rotor (5) et au deuxième rotor (7) de telle sorte que l'état de commande de l'actionneur (8) est réglable d'après l'indication d'une rotation relative entre les deux rotors (5, 7).

5. Appareil d'entraînement de roue électromécanique selon la revendication 4, **caractérisé en ce que** l'accouplement cinématique de l'actionneur (8) avec les deux rotors (5, 7) est réalisé par le biais d'un engrenage cumulateur (9).

6. Appareil d'entraînement de roue électromécanique selon la revendication 5, **caractérisé en ce que** cet engrenage cumulateur (9) comprend une roue planétaire (10), et **en ce que** l'actionneur (8) est entraîné par le biais de cette roue planétaire (10), et **en ce que** l'engrenage cumulateur (9) comprend une roue à denture intérieure (11) et la roue à denture intérieure (11) est reliée au premier rotor (5), et **en ce que** l'engrenage cumulateur (9) comprend une roue solaire (12) et **en ce que** la roue solaire (12) est reliée au deuxième rotor (7).

7. Appareil d'entraînement de roue électromécanique selon au moins l'une des revendications 4 à 6, **caractérisé en ce que** l'actionneur (8) peut être déplacé dans une première position finale, et **en ce que** dans cette première position finale, l'engrenage cumulateur (9) adopte un état d'accouplement complet et le couple généré au niveau des deux rotors (5, 7) est appliqué au moyeu de roue (2), et **en ce que** l'actionneur (8) peut être déplacé dans une deuxième position finale dans laquelle l'engrenage cumulateur (9) adopte également un état d'accouplement complet.

8. Appareil d'entraînement de roue électromécanique selon au moins l'une des revendications 4 à 7, **caractérisé en ce qu'**il existe un appareil d'accouplement (13) par le biais duquel le moyeu de roue (2) peut être accouplé à un appareil à arbre d'entraînement de roue (14), et **en ce que** cet appareil d'accouplement (13) peut être actionné par le biais de l'actionneur (8).

9. Appareil d'entraînement de roue électromécanique selon au moins l'une des revendications 4 à 8, **caractérisé en ce que** l'appareil d'accouplement (13) est réalisé sous la forme d'un accouplement à lamelles et la force de pressage des lamelles (15, 16) à l'intérieur de l'accouplement à lamelles peut être réglée par le biais de l'actionneur (8).

10. Appareil d'entraînement de roue électromécanique selon au moins l'une des revendications 4 à 9, **caractérisé en ce qu'**il existe un appareil de freinage (30) qui, en tant que tel, génère un moment de freinage agissant entre le porte-palier de roue (1) et le moyeu de roue (2), et **en ce que** cet appareil de freinage (30) peut être actionné par le biais de l'actionneur (8), l'actionneur (8) étant accouplé avec l'appareil de freinage (30) et l'appareil d'accouplement (13) de telle sorte que dans la zone de la première position finale, l'appareil d'accouplement passe dans un état d'accouplement et dans la zone de la deuxième position finale, l'appareil de freinage (30) passe dans un état de freinage de roue.
